# EUROPEAN PATENT SPECIFICATION

(11) **EP 2 540 576 B1**
(45) Date of publication and mention of the grant of the patent: **05.11.2014**
(21) Application number: 11744843.1
(22) Date of filing: 06.01.2011
(51) Int. Cl.: B60R 19/12, B60R 19/18, B60R 19/24, B21D 22/02, B21D 53/88

(54) **BUMPER LOWER STIFFENER WITH IMPROVED PERFORMANCE USING ULTRA HIGH STRENGTH STEEL PIPE AND MANUFACTURING METHOD THEREOF**
STOSSDÄMPFER-UNTERKANTENVERSTÄRKUNG MIT ERHÖHTER LEISTUNG DURCH EIN STAHLROHR VON ULTRAHOHER FESTIGKEIT SOWIE HERSTELLUNGSVERFAHREN DAFÜR
RAIDISSEUR INFÉRIEUR DE PARE-CHOC COMPORTANT UN TUBE D'ACIER À ULTRA- HAUTE RÉSISTANCE ET PROCÉDÉ DE FABRICATION DE CE RAIDISSEUR

(30) Priority: 22.02.2010 KR 20100015552
(43) Date of publication of application: 02.01.2013
(73) Proprietor: Hyundai Hysco, Ulsan 683-711 (KR)
(72) Inventor: KIM, Hyo-Sub, Ulsan 683-715 (KR); SUNG, Kyung-Jin, Ulsan 683-715 (KR); KIM, Kwang-Soon, Ulsan 682-061 (KR); KIM, Yun-Gyu, Ulsan 680-020 (KR)
(74) Representative: Algemeen Octrooi- en Merkenbureau B.V.
(86) International application number: PCT/KR2011/000058
(87) International publication number: WO 2011/102601

(56) References cited:
- WO-A1-2008/102012
- JP-A- 2008 132 935
- JP-A- 2008 132 935
- JP-A- 2010 023 792
- KR-A- 20040 057 777
- KR-B1- 100 767 303
- US-A- 5 669 992
- US-A1- 2005 225 101

## Description

### [Technical Field]

The present invention relates to a bumper lower stiffener provided to a lower portion of a front bumper of a vehicle and a method of manufacturing the same, and more particularly, to a bumper lower stiffener manufactured using an ultra-high strength steel pipe produced by hot forming, and a method of manufacturing the same.

### [Background Art]

Generally, a vehicle is provided at a front side thereof with a headlight, a grill, a hood latch, cooling module components, and the like, which are secured to a carrier. In order to reduce the weight of the carrier while increasing rigidity thereof, a part of the carrier subjected to high load is made of a metallic material and a part of the carrier subjected to low load is made of a plastic composite. Such a carrier is formed by insert-injection of a metal plate and a plastic material.

A back beam for mounting a front bumper is coupled to a front side member of the carrier. In addition, a bumper lower stiffener is mounted on a lower member of the carrier to reduce damage of the knee of a pedestrian while preventing the body of the pedestrian from entering under a vehicle. Here, it is necessary for the lower stiffener to satisfy the collision test requirements of evaluation standards according to European regulations for protection of pedestrians.

JP 2008/32935 A discloses a bumper lower striffener according to the preamble of claim 1.

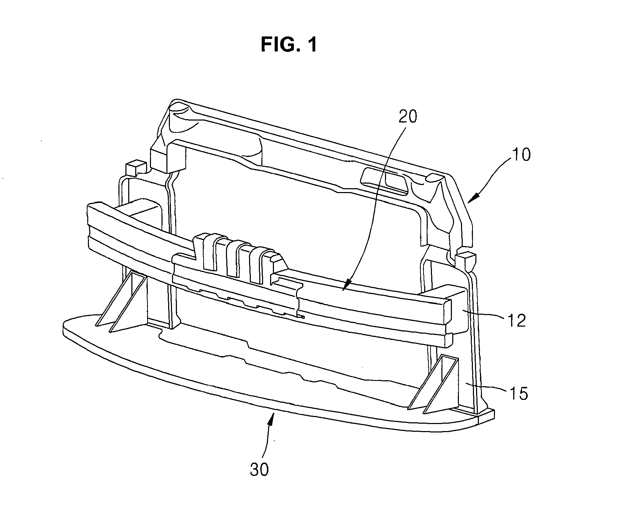

Fig. 1 is a perspective view of a lower stiffener mounting structure in the related art.

As shown therein, a carrier 10 is provided at the middle thereof with a front bumper back-beam 20 coupled to side members 12 of the carrier 10 such that a front bumper can be mounted thereon.

In addition, a lower stiffener 30 made of a plastic material is coupled to lower members 15 of the carrier 10 under the front bumper back-beam 20. The lower stiffener 30 has a panel shape and protrudes forwards from the carrier 10 along a lower side of the carrier 10.

Here, the bumper lower stiffener 30 is formed in a panel shape by injection molding of a plastic material and has narrow sections coupled to the lower members 15 of the carrier 10. When impact is applied to the lower member 15 of the carrier 10 made of the plastic material, the lower member 15 of the carrier 10 undergoes cracking and, at the same time, the lower stiffer 30 is easily broken from the carrier 10 by moment caused by impact on the lower stiffener 30. As a result, a pedestrian is likely to suffer damage to the knee directly by the bumper back-beam and impact is transferred through the carrier 10 to other components such as headlamps, a cooling module and the like placed on the front side of the vehicle, causing an increase in repair cost due to damage of many components of the vehicle even upon slight collision.

The bumper lower stiffener 30 serves to protection of main components on the front side of a vehicle and to ensure pedestrian safety. Furthermore, the bumper lower stiffener acts as a major component in determination of test and marketability evaluation standards due to an increase in repair cost resulting from damage of peripheral components upon low speed collision. As for the marketability evaluation standard upon low speed collision, RCAR (Research Council for Automobile Repair) testing is used.

In the RCAR testing, marketability of a vehicle is evaluated based on repair costs for complete restoration of the vehicle upon collision at a speed of 9 miles/hr.

To repair the vehicle to a normal state at low cost in RCAR testing, it is necessary for the vehicle to undergo minimal damage. For this purpose, the bumper lower stiffener must have good strength and damage of the carrier must be minimized.

### [Disclosure]

### [Technical Problem]

The present invention is directed to a bumper lower stiffener, which is conducive to weight reduction of a vehicle and can satisfy low speed collision performance of the vehicle.

The present invention is also directed to a bumper lower stiffener, which can protect cooling module components and pedestrians upon low speed collision.

The present invention is also directed to a method of manufacturing such a bumper lower stiffener.

### [Technical Solution]

In accordance with one aspect, the present invention provides a bumper lower stiffener, which includes a horizontal member having a tube shape and being provided at both sides thereof with planar sections for assembly; and a pair of brackets connecting the horizontal member to a front bumper back-beam.

The horizontal member may be formed corresponding to a front side or bumper structure of a vehicle.

The planar sections of the horizontal member may be coupled to the brackets via welding, riveting or bolting.

Each of the brackets may be provided at an upper end thereof with an attachment seat protruding to overlap the front bumper back-beam, and the attachment seats of the brackets may be coupled to the front bumper back-beam via welding, riveting or bolting.

The horizontal member may be formed of a steel pipe containing a quenchability enhancement element. Further, the horizontal member may be formed of a cold-rolled or hot-rolled steel pipe.

Specifically, the horizontal member may be formed of a boron steel pipe. The horizontal member may include an Al-Si coating layer or a zinc galvanized layer.

In accordance with another aspect, the present invention provides a method of manufacturing the bumper lower stiffener as set forth above, which includes: cutting a steel pipe containing a quenchability enhancement element to a predetermined length; heating the cut steel pipe to a pressing temperature; hot-pressing the heated steel pipe with press dies into a horizontal member having planar sections at both sides thereof; and quenching the horizontal member, with the press dies closed.

The heating the cut steel pipe may be performed by RF induction heating or by atmospheric heating in a heating furnace. The pressing temperature may range from 768 °C to 1000 °C.

Quenching the horizontal member may include supplying a coolant into the horizontal member while cooing the dies. Quenching the horizontal member may be performed at a cooling speed from -20 °C/sec to -100 °C/sec.

### [Advantageous Effects]

According to the present invention, the bumper lower stiffener is formed using a steel pipe containing quenchability enhancement elements and thus is conducive to weight reduction of a vehicle and can satisfy low speed collision performance of the vehicle.

In addition, according to the present invention, the bumper lower stiffener has a small volume so as to be accommodated in a vehicle, thereby improving interior spatial efficiency of the vehicle.

Further, according to the present invention, the bumper lower stiffener is coupled to a front bumper back-beam made of metal to minimize damage of a carrier, thereby providing good evaluation result in RCAR testing.

### [Description of Drawings]

Fig. 1 is a perspective view of a lower stiffener mounting structure in the related art;
Fig. 2 is a perspective view of a bumper lower stiffener assembled to a carrier, in accordance with one embodiment of the present invention;
Fig. 3 is a perspective view of the bumper lower stiffener separated from the carrier, in accordance with the embodiment of the present invention;
Fig. 4 is a flowchart of a method of manufacturing a bumper lower stiffener in accordance with one embodiment of the present invention; and
Fig. 5 is a process diagram of the method of manufacturing a bumper lower stiffener in accordance with the embodiment of the present invention.

### [Best Mode]

Exemplary embodiments of the present invention will now be described with reference to the accompanying drawings.

The above and other aspects, features, and advantages of the invention will become apparent from the detailed description of the following embodiments in conjunction with the accompanying drawings. It should be understood that the present invention is not limited to the following embodiments and may be embodied in different ways, and that the embodiments are given to provide complete disclosure of the invention and to provide thorough understanding of the invention to those skilled in the art. The scope of the invention is limited only by the accompanying claims and equivalents thereof. Like components will be denoted by like reference numerals throughout the specification.

Further, the size and relative sizes of elements may be exaggerated for clarity. It will be understood that when an element is referred to as being "installed in or connected to" another element, it can be directly disposed on the other element, it can adjoin or be separated a predetermined distance from the other element, or a third element may also be present therebetween to fix or connect it to the other element.

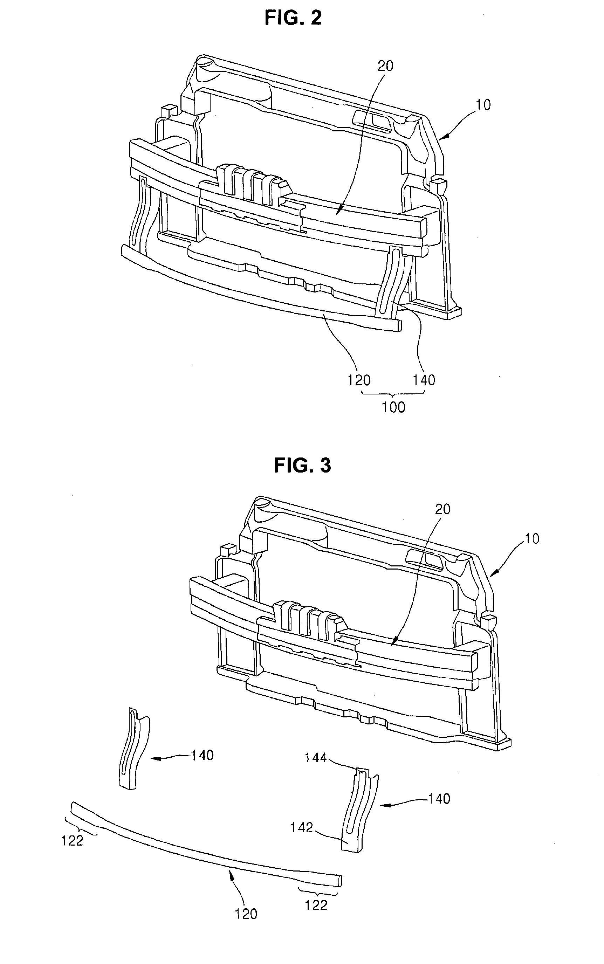

Fig. 2 is a perspective view of a bumper lower stiffener assembled to a carrier, in accordance with one embodiment of the present invention; and Fig. 3 is a perspective view of the bumper lower stiffener separated from the carrier, in accordance with the embodiment of the present invention.

As shown therein, the bumper lower stiffener 100 according to one embodiment incudes a generally tube-shaped horizontal member 120, and a pair of brackets 140, which connect the horizontal member 120 to a front bumper back-beam 20.

The horizontal member 120 and the brackets 140 are made of a metallic material and may be coupled to each other by riveting, bolting or welding. The brackets 140 may also be coupled to the front bumper back-beam 20 by riveting, bolting or welding.

Advantageously, welding reduces the number of operations and permits automation, and bolting provides good maintainability.

For a conventional plastic bumper lower stiffener, the carrier 10 (see Fig. 1) and the lower member 15 (see Fig. 1) are integrally formed with each other by injection molding a plastic material. On the contrary, according to the present invention, the bumper lower stiffener 100 is formed of steel so as to be coupled to the front bumper back-beam 20 made of steel by bolting, riveting or welding, thereby improving workability, A/S repair, and strength.

The horizontal member 120 is made by hot-pressing a steel pipe and has planar sections 122 formed at portions thereof to be connected to the brackets 140 to ensure improved assembly. Each of the planar sections 122 of the horizontal member 120 is connected to the bracket 140 via bolting, riveting or welding. Instead of a pipe-shaped member connected to the brackets 140 via welding, the horizontal member having the planar sections 122 corresponding in shape to the brackets 140 may improve workability when coupled to the brackets 140 via the planar sections 122. Particularly, the planar sections 122 of the horizontal member may reduce repair cost and provide optimal workability in A/S repair, thereby further improving marketability.

The horizontal member 120 may be made of a steel pipe containing quenchability enhancement elements. The steel pipe may be a hot-rolled steel pipe or a cold-rolled steel pipe, preferably, a boron steel pipe. The horizontal member 120 may have an Al-Si coating layer or a zinc galvanized layer. The boron steel pipe may permit improvement of strength via heat treatment, and thus help weight reduction and strengthening of a vehicle. Mo, Cr, V and the like may be added together with boron as the quenchability enhancement elements.

The brackets 140 serve to bridge the front bumper back-beam 20 and the horizontal member 120 and may be made by pressing a steel sheet.

Each of the brackets 140 has a substantially rectangular cross-section open at one side thereof to have high resistance to front impact. Further, each bracket 140 is formed at an upper portion thereof with an attachment seat 144, which is connected to the front bumper back-beam 20 by bolting, riveting or bolting. The attachment seat 144 extends upwards from a middle section of the rectangular cross-section open at one side thereof to overlap the surface of the front bumper back-beam.

In addition, each of the brackets 140 is formed at a lower portion thereof with a coupling surface 142, which is coupled to the planar section 122 of the horizontal member 120 by bolting, riveting or welding. The coupling surface 142 corresponds in shape to the planar section 122 to overlap the planar section in assembly, thereby improving coupling rigidity.

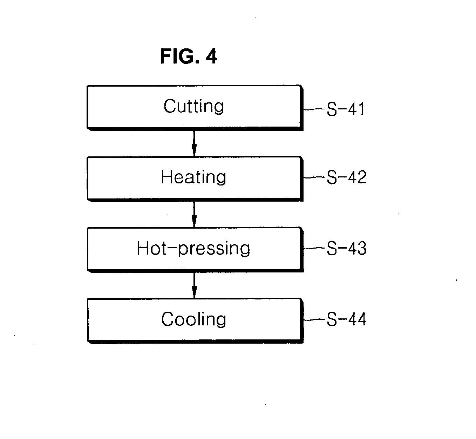

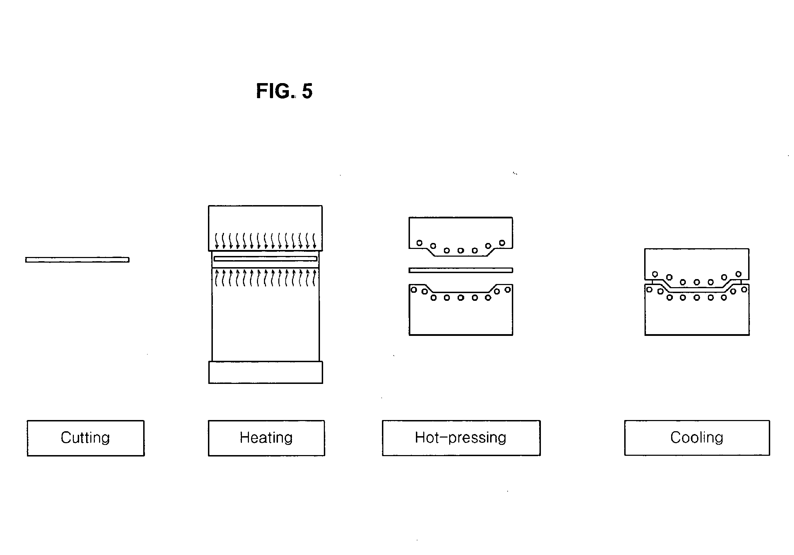

Fig. 4 is a flowchart of a method of manufacturing a bumper lower stiffener in accordance with one embodiment of the present invention and Fig. 5 is a process diagram of the method of manufacturing a bumper lower stiffener in accordance with the embodiment of the present invention.

In manufacture of a bumper lower stiffener according to this invention, a steel pipe is subjected to hot pressing to form a horizontal member and brackets are prepared using a steel sheet and connected to the front bumper back-beam.

Since formation of the brackets using the steel sheet may be achieved by blanking and pressing, elaboration of this operation will be omitted herein.

The horizontal member may be manufactured by cutting a steel pipe containing a quenchability enhancement element to a predetermined length (S-41); heating the cut steel pipe to a pressing temperature (S-42); hot-pressing the heated steel pipe with press dies into a horizontal member having planar sections at both sides thereof (S-43); and quenching the horizontal member with the press dies closed (S-44).

As the steel pipe for the horizontal member, an electric resistance welding (ERW) steel pipe may be used and may be prepared using boron steel. Since the boron steel is increased in strength by heat treatment and quenching, the boron steel is conducive to weight reduction and strengthening of vehicle components. In addition, the steel pipe may be selected from Al-Si coating steel pipes, zinc galvanized steel pipes, hot-rolled steel pipes, cold-rolled steel pipes, and the like.

Heating the cut steel pipe (S-42) is a preparation stage for hot pressing, and in this operation, the steel pipe having high strength is heated to a temperature for hot pressing. Here, the entirety of the cut steel pipe is heated at the same time. Specifically, this operation may be performed by high frequency induction heating in which high frequency current is applied to the circumference of the steel pipe such that the steel pipe is heated by an induced current. Alternatively, this operation may be performed by atmospheric heating in which the steel pipe is loaded into a furnace at high temperature and heated therein.

In operation of heating the cut steel pipe (S-42), the steel pipe may be heated to 768∼1000 °C.

This is because steel is typically heated to an austenite stabilization temperature in order to have a microstructure ensuring desired strength for components after quenching. Here, since there is a possibility of evaporation of the coating layer from the steel pipe at a temperature exceeding 1000 °C for the Al-Si coating steel pipe or at a temperature exceeding 800 °C for the zinc galvanized steel pipe, the heating temperature may be controlled to 1000 °C or less or to 800 °C or less according to the properties of coating materials.

In operation of hot-pressing the heated steel pipe (S-43), the heated steel pipe is subjected to pressing by press dies to form a horizontal member having planar sections at both sides thereof. Here, quenching the horizontal member (S-44) is also performed with the dies closed, as in hot-pressing the heated steel pipe (S-43).

To achieve precise formation of the high strength steel pipe, the steel pipe is heated to a temperature for pressing and is subjected to pressing by the press dies.

The press dies used in hot pressing (S-43) are configured to permit rapid cooling and are formed therein with a coolant passage through which a coolant is supplied into the horizontal member, with the press dies closed.

In operation of cooling (S-44), a coolant is supplied into the horizontal member while cooling the dies in a closed state. As the cooling speed is increased through simultaneous application of indirect cooling and direct cooling in which indirect cooling is performed to cool the dies and direct cooling is performed by injecting the coolant into the horizontal member, strength of the horizontal member may be further increased. Typically, the coolant may have a temperature ranging from 5 °C to 30 °C.

In operation of cooling (S-44), cooling is performed at a speed of -20 °C/sec to -10 °C/sec. The coolant may be cooling water, and, alternatively, may be cold oil or cold gas.

The cooling speed in this range permits phase transformation of the horizontal member into martensite structure. Specifically, when a heated article is subjected to cooling at a speed of less than -20 °C/sec, the structure of the article is transformed into pearlite or bainite structure, thereby providing insufficient strength. Thus, it is desirable that the Fe matrix of the article be subjected to phase transformation into complete martensite structure by maintaining the quenching speed.

When subjected to quenching after hot pressing, an oxidation scale layer can be partially formed on a surface of a material which has no Al-Si or zinc-galvanized layer formed thereon. Here, since the oxidation scale layer can deteriorate surface quality of a product according to conditions, the method may further include shot blasting or wire brushing to remove the oxidation scale layer after quenching (S-44).

The bumper lower stiffener produced by the method according to the embodiment has high strength and is reduced in weight by 15% or more as compared with the weight of the conventional bumper lower stiffener produced by pressing and welding. In addition, as compared with the lower stiffener made of a plastic material, the bumper lower stiffener produced by the method according to the embodiment provides improved protection performance with respect to peripheral components such that low repair cost is needed upon low speed collision, thereby providing good evaluation result in RCAR testing.

### [Industrial Applicability]

The present invention relates to a bumper lower stiffener provided to a lower portion of a front bumper of a vehicle and a method of manufacturing the same, and more particularly, to a bumper lower stiffener manufactured using an ultra-high strength steel pipe provided by hot forming, and a method of manufacturing the same.

The bumper lower stiffener is formed using a steel pipe containing quenchability enhancement elements, and thus is conducive to weight reduction of a vehicle and provides improved protection with respect to peripheral components and pedestrians upon low speed collision.

## Claims

1. A bumper lower stiffener (100) comprising:
a member (120) having a tube shape and being provided at both sides thereof with planar sections (122) for assembly; **characterized in that**
the member (120) is a horizontal member (120), the bumper lower stiffener (100) further comprising a pair of brackets (140) connecting the horizontal member to a front bumper back-beam (20), to which pair of brackets (140) the planar sections (122) are to be connected.

2. The bumper lower stiffener (100) according to claim 1, wherein the horizontal member (120) is formed corresponding to a front side or bumper structure of a vehicle.

3. The bumper lower stiffener (100) according to claim 1, wherein the planar sections (122) of the horizontal member (120) are coupled to the brackets (140) via welding, riveting or bolting.

4. The bumper lower stiffener (100) according to claim 1, wherein each of the brackets (140) is provided at an upper end thereof with an attachment seat (144) protruding to overlap the front bumper back-beam (20).

5. The bumper lower stiffener (100) according to claim 4, wherein the attachment seats (144) of the brackets (140) are coupled to the front bumper back-beam (20) via welding, riveting or bolting.

6. The bumper lower stiffener (100) according to claim 1, wherein the horizontal member (120) is formed of a steel pipe containing a quenchability enhancement element.

7. The bumper lower stiffener (100) according to claim 6, wherein the horizontal member (120) is formed of a cold-rolled or hot-rolled steel pipe.

8. The bumper lower stiffener (100) according to claim 6, wherein the horizontal member (120) is formed of a boron steel pipe.

9. The bumper lower stiffener (100) according to claim 6, wherein the horizontal member (120) comprises an Al-Si coating layer or a zinc galvanized layer.

10. The bumper lower stiffener (100) according to claim 1, wherein each
of the brackets (140) has a rectangular cross-section open at one side thereof.

11. A method of manufacturing a bumper lower stiffener (100) according to claim 1, comprising:
cutting a steel pipe containing a quenchability enhancement element to a predetermined length;
heating the cut steel pipe to a pressing temperature;
hot-pressing the heated steel pipe with press dies into a horizontal member (120) having planar sections (122) at both sides thereof; and
quenching the horizontal member (120), with the press dies closed.

12. The method according to claim 11, wherein the heating the cut steel pipe is performed by RF induction heating or by atmospheric heating in a heating furnace.

13. The method according to claim 11, wherein the pressing temperature ranges from 768 °C to 1000 °C.

14. The method according to claim 11, wherein the quenching the horizontal member (120) comprises supplying a coolant into the horizontal member while cooling the dies.

15. The method according to claim 14, wherein the quenching the horizontal member (120) is performed at a cooling speed from -20 °C /sec to -100 °C/sec.

## Patentansprüche

1. Untere Stoßfängerversteifung (100) mit:
einem Element (120), das eine Rohrform aufweist und an seinen beiden Seiten mit planaren Abschnitten (122) zur Montage versehen ist, **dadurch gekennzeichnet, dass**
das Element (120) ein horizontales Element (120) ist, wobei die untere Stoßfängerversteifung (100) ferner ein Paar Halter (140) umfasst, mit denen das horizontale Element mit einem rückwärtigen Träger (20) eines Frontstoßfängers verbunden ist, wobei die planaren Abschnitte (122) mit dem Paar Halter (140) zu verbinden sind.

2. Untere Stoßfängerversteifung (100) nach Anspruch 1, bei der das horizontale Element (120) entsprechend einer Vorderseite oder einer Stoßfängerstruktur eines Fahrzeugs ausgebildet ist.

3. Untere Stoßfängerversteifung (100) nach Anspruch 1, bei der die planaren Abschnitte (122) des horizontalen Elements (120) mittels Schweißen, Nieten oder Verschrauben mit den Haltern (140) gekoppelt sind.

4. Untere Stoßfängerversteifung (100) nach Anspruch 1, bei der jeder der Halter (140) an einem oberen Ende mit einem Befestigungssitz (144) versehen ist, der so vorsteht, dass er den rückwärtigen Träger (20) des Frontstoßfängers überlappt.

5. Untere Stoßfängerversteifung (100) nach Anspruch 4, bei der die Befestigungssitze (144) der Halter (140) mittels Schweißen, Nieten oder Verschrauben mit dem rückwärtigen Träger (20) des Frontstoßfängers gekoppelt sind.

6. Untere Stoßfängerversteifung (100) nach Anspruch 1, bei der das horizontale Element (120) aus einem Stahlrohr gebildet ist, das ein Abschreckbarkeitsverbesserungselement enthält.

7. Untere Stoßfängerversteifung (100) nach Anspruch 6, bei der das horizontale Element (120) aus einem kaltgewalzten oder warmgewalzten Stahlrohr gebildet ist.

8. Untere Stoßfängerversteifung (100) nach Anspruch 6, bei der das horizontale Element (120) aus einem Borstahlrohr gebildet ist.

9. Untere Stoßfängerversteifung (100) nach Anspruch 6, bei der das horizontale Element (120) eine Al-Si-Überzugsschicht oder eine durch Verzinken gebildete Schicht umfasst.

10. Untere Stoßfängerversteifung (100) nach Anspruch 1, bei der jeder der Halter (140) einen rechteckigen Querschnitt hat, der an einer Seite offen ist.

11. Verfahren zur Herstellung einer unteren Stoßfängerversteifung (100) nach Anspruch 1, das Folgendes umfasst:
Zuschneiden eines Stahlrohrs, das ein Abschreckbarkeitsverbesserungselement enthält, auf eine vorbestimmte Länge,
Erwärmen des zugeschnittenen Stahlrohrs auf eine Presstemperatur,
Warmpressen des erwärmten Stahlrohrs mit Presswerkzeugen zu einem horizontalen Element (120), das an seinen beiden Seiten planare Abschnitte (122) aufweist, und
Abschrecken des horizontalen Elements (120) bei geschlossenen Presswerkzeugen.

12. Verfahren nach Anspruch 11, bei dem das Erwärmen des zugeschnittenen Stahlrohrs durch HF-Induktionserwärmung oder durch atmosphärisches Erwärmen in einem Wärmeofen durchgeführt wird.

13. Verfahren nach Anspruch 11, bei dem die Presstemperatur in einem Bereich von 768°C bis 1000°C liegt.

14. Verfahren nach Anspruch 11, bei dem das Abschrecken des horizontalen Elements (120) das Zuführen eines Kühlmittels in das horizontale Element umfasst, während die Werkzeuge gekühlt werden.

15. Verfahren nach Anspruch 14, bei dem das Abschrecken des horizontalen Elements (120) bei einer Abkühlgeschwindigkeit von -20°C/s bis -100°C/s durchgeführt wird.

## Revendications

1. Raidisseur inférieur (100) de pare-chocs comprenant :
un élément (120) ayant une forme tubulaire et étant prévu, au niveau de ses deux côtés, avec des sections planes (122) pour l'assemblage ; **caractérisé en ce que** :
l'élément (120) est un élément horizontal (120), le raidisseur inférieur (100) de pare-chocs comprenant en outre une paire de supports (140) raccordant l'élément horizontal à une poutre arrière (20) de pare-chocs avant, à laquelle paire de supports (140), doivent être raccordées les sections planes (122).

2. Raidisseur inférieur (100) de pare-chocs selon la revendication 1, dans lequel l'élément horizontal (120) est formé en correspondance à un côté avant ou structure de pare-chocs d'un véhicule.

3. Raidisseur inférieur (100) de pare-chocs selon la revendication 1, dans lequel les sections planes (122) de l'élément horizontal (120) sont couplées aux supports (140) via le soudage, le rivetage ou le boulonnage.

4. Raidisseur inférieur (100) de pare-chocs selon la revendication 1, dans lequel chacun des supports (140) est prévu, au niveau de son extrémité supérieure, avec un siège de fixation (144) faisant saillie pour recouvrir la poutre arrière (20) de pare-chocs avant.

5. Raidisseur inférieur (100) de pare-chocs selon la revendication 4, dans lequel les sièges de fixation (144) des supports (140) sont couplés à la poutre arrière (20) de pare-chocs avant, via le soudage, le rivetage ou le boulonnage.

6. Raidisseur inférieur (100) de pare-chocs selon la revendication 1, dans lequel l'élément horizontal (120) est formé avec un tube en acier contenant un élément d'amélioration de trempe.

7. Raidisseur inférieur (100) de pare-chocs selon la revendication 6, dans lequel l'élément horizontal (120) est formé à partir d'un tube en acier laminé à froid ou laminé à chaud.

8. Raidisseur inférieur (100) de pare-chocs selon la revendication 6, dans lequel l'élément horizontal (120) est formé avec un tube en acier au bore.

9. Raidisseur inférieur (100) de pare-chocs selon la revendication 6, dans lequel l'élément horizontal (120) comprend une couche de revêtement Al-Si ou une couche galvanisée au zinc.

10. Raidisseur inférieur (100) de pare-chocs selon la revendication 1, dans lequel chacun des supports (140) a une section transversale rectangulaire ouverte au niveau de l'un de ses côtés.

11. Procédé pour fabriquer un raidisseur inférieur (100) de pare-chocs selon la revendication 1, comprenant les étapes consistant à :
couper un tube en acier contenant un élément d'amélioration de trempe à une longueur prédéterminée ;
faire chauffer le tube d'acier coupé, à une température de pression ;
presser à chaud le tube en acier chauffé avec des presses, en un élément horizontal (120) ayant des sections planes (122) au niveau de ses deux côtés ; et
tremper l'élément horizontal (120), avec les presses fermées.

12. Procédé selon la revendication 11, dans lequel l'étape consistant à chauffer le tube en acier coupé est réalisée par chauffage par induction RF ou par chauffage atmosphérique dans un four de chauffage.

13. Procédé selon la revendication 11, dans lequel la température de pression est de l'ordre de 768°C à 1000°C.

14. Procédé selon la revendication 11, dans lequel l'étape consistant à tremper l'élément horizontal (120) comprend l'étape consistant à amener un réfrigérant dans l'élément horizontal tout en refroidissant les moules.

15. Procédé selon la revendication 14, dans lequel l'étape consistant à tremper l'élément horizontal (120) est réalisée à une vitesse de refroidissement de -20°C/sec à -100°C/sec.
